# EUROPÄISCHE PATENTSCHRIFT

(11) **EP 2 929 332 B1**
(45) Veröffentlichungstag und Bekanntmachung des Hinweises auf die Patenterteilung: **03.06.2020**
(21) Anmeldenummer: 13763238.6
(22) Anmeldetag: 16.09.2013
(51) Int. Cl.: G01N 21/956

(54) **INSPEKTIONSVORRICHTUNG**
INSPECTION APPARATUS
DISPOSITIF D'INSPECTION

(30) Priorität: 05.12.2012 DE 102012111835
(43) Veröffentlichungstag der Anmeldung: 14.10.2015
(73) Patentinhaber: Unity Semiconductor GmbH, 01099 Dresden (DE)
(72) Erfinder: SROCKA, Bernd, 13125 Berlin (DE)
(74) Vertreter: Weisse, Renate
(86) Internationale Anmeldenummer: PCT/EP2013/069156
(87) Internationale Veröffentlichungsnummer: WO 2014/086511

(56) Entgegenhaltungen:
- WO-A1-97/13370
- US-A- 5 848 123
- US-A1- 2003 218 741
- US-A1- 2011 263 049

## Beschreibung

Die Erfindung betrifft eine Vorrichtung zur Inspektion von flachen Objekten, insbesondere Wafer, enthaltend
(a) eine Objekthalterung;
(b) eine Kameraanordnung mit einer Kamera zur Aufnahme eines Bildes zumindest eines Teiles des Objekts;
(c) eine Antriebsanordnung zur Erzeugung einer Drehbewegung zwischen der Kameraanordnung und dem Objekt von einer ersten Aufnahmeposition in wenigstens eine weitere Aufnahmeposition;
(d) die Kameraanordnung wenigstens eine weitere Kamera aufweist; wobei
(e) die in unterschiedliche Kameras abgebildeten Objektbereiche zumindest teilweise unterschiedlich sind, wobei alle Kameras gemeinsam nur einen Teil des gesamten Inspektionsbereichs des Objekts gleichzeitig erfassen;
(f) durch die mit der Antriebsanordnung erzeugte Drehbewegung zwischen Kameraanordnung und Objekt jeder Objektpunkt des gesamten Inspektionsbereichs zumindest einmal in eine der Kameras abbildbar ist, und
(g) das Objekt, die Objekthalterung oder die Kameraanordnung um eine Achse senkrecht zur Objektebene der Kameras drehbar ist.

Die Erfindung betrifft ferner ein Verfahren zur Inspektion von flachen Objekten, insbesondere Wafer, mit den Schritten:
(a) gleichzeitiges Aufnehmen von Bildern zumindest teilweise unterschiedlicher Objektbereiche mit unterschiedlichen Kameras einer Kameraanordnung, wobei alle Kameras gemeinsam nur einen Teil des gesamten Inspektionsbereichs des Objekts gleichzeitig erfassen;
(b) Erzeugen einer Relativbewegung zwischen der Kameraanordnung und dem Objekt von einer ersten Aufnahmeposition in wenigstens eine weitere geeignete Aufnahmeposition, bei welcher ein weiterer Teil des Inspektionsbereichs erfasst wird; und
(c) Wiederholen der Schritte (a) und (b) bis jeder Objektpunkt des gesamten Inspektionsbereichs zumindest einmal in eine der Kameras abgebildet ist.

In verschiedenen Industriezweigen werden flächige Produkte mit optischen, bildgebenden Verfahren auf Fehler untersucht. In der Halbleiter- und Solarzellenindustrie sind dies unter anderem Wafer. Wafer sind Scheiben aus Halbleiter-, Glas-, Folien- oder Keramikmaterialien. Die Wafer werden in bestimmten Anwendungen typischerweise ganzflächig oder zumindest auf großen Teilflächen geprüft. Diese Prüfung nennt man Makro-Inspektion. Die für die Erkennung der gesuchten Fehler erforderliche laterale Auflösung steigt dabei mit der Weiterentwicklung der allgemeinen Produktionstechnik. Typischerweise werden für neue Technologien Auflösungen in der Makro-Inspektion von 5 µm und kleiner - bis zu 1 µm - verlangt. Gleichzeitig sind Geräte mit einem hohen Durchsatz an zu prüfenden Wafern wünschenswert. Ebenso wünschenswert ist eine Möglichkeit, bei verringerten Auflösungsanforderungen den Durchsatz der Inspektion einzig durch Softwareeinstellungen steigern zu können.

Analoge Aufgabenstellungen sind in anderen Industriezweigen zu lösen. In der Flat-Panel-Industrie sind die Displays in der Produktion auf Fehler zu prüfen. Dabei werden zum Teil ganzflächig auf den Displays bildgebende Verfahren zur Fehlersuche benutzt. In der Elektroindustrie werden bei der Prüfung von Leiterplatten Fehler mit optischen Verfahren auf Serien von Prüflingen ermittelt.

Gemeinsam ist allen diesen Anwendungen der Bedarf an schneller Prüfung einer hohen Anzahl von in der Regel gleichartigen Prüflingen. Solche Objekte sind Leiterplatten, Wafer, Solarzellen, Displays und dergleichen. Gemeinsam ist den Anwendungen auch der Einsatz von Sensoren zur Erzeugung von großflächigen Abbildungen der Prüflinge. Die Abbildungen können je nach Art des gesuchten Fehlers sowohl mit optisch fotografierenden Systemen als auch mit punktuell arbeitenden Sensoren erzeugt werden. Optisch fotografierende Systeme sind beispielsweise Flächen- oder Zeilenkameras. Punktuell arbeitende Sensoren sind beispielsweise Detektoren zur Messung der Reflektion von optischen Strahlen, Mikrowellen oder Schallwellen. Es können auch magentische Sensoren eingesetzt werden.

Üblicherweise werden die zu untersuchenden Objekte durch die Aufnahme einer Vielzahl von Bildern fotografiert, wobei Wafer und Aufnahmesystem für jedes einzelne Bild gegeneinander verschoben werden, um so die gesamte Waferoberfläche zu inspizieren. Es kommen dabei sowohl Zeilen- wie auch Flächenkameras als Aufnahmesensoren zum Einsatz.

Die Verschiebung zwischen Objekt und Aufnahmesystem erfolgt entweder schrittweise oder kontinuierlich. Bei der schrittweisen Verschiebung wird ein Wafer oder die Kamera bewegt und für die Aufnahme eines Bildes angehalten. Bei der kontinuierlichen Verschiebung werden die Bilder während der Bewegung des Wafers ohne anzuhalten mit ausreichend kurzer Aufnahme- oder Belichtungszeit aufgenommen. Unterschiedliche Auflösungen werden durch den Einsatz verschiedener Objektive mit unterschiedlichen Vergrößerungsfaktoren erreicht. All diesen Verfahren ist gemeinsam, dass die Inspektion eines gesamten Wafers eine Vielzahl von Bildern und eine mechanische Bewegung erfordert. Die Inspektion beansprucht daher eine erhebliche Zeit. Mit steigender Auflösung wächst die Inspektionszeit quadratisch.

### Stand der Technik

WO2009121628A2 (Nanda Tech) offenbart ein Verfahren zur Inspektion des gesamten Wafers mit einer einzigen Aufnahme ohne den Wafer zu bewegen. Diese Lösung ist sehr schnell, zeigt jedoch Mängel in der Auflösung für einzelne kleine Defekte.

US20110069154A1 offenbart ein Inspektionssystem für rechtwinklige Solarzellen. Bei dem Inspektionssystem werden mehrere Kameras fest in einer Reihe (Array) oberhalb der Solarzellen angeordnet. Die Solarzellen bewegen sich kontinuierlich in einer Richtung, die senkrecht zur Reihe der Kameras verläuft. Der Abstand der Kameras ist derart ausgewählt, dass die Gesichtsfelder etwas überlappen und ein Bild der gesamten Solarzelle aufgenommen werden kann. Die simultan aufgenommenen Bilder werden digital zusammengeführt. Dabei haben die Bildelemente eine Breite im Bereich von 17 Mikrometer. Sowohl telezentrische, als auch nicht-telezentrische Beleuchtung ist offenbart.

US 20110069878 A1 zeigt ein zweidimensionales Kamera-Array, das über einer ohne Halt bewegten Leiterplatte angeordnet ist. Die Druckschrift beschreibt ausdrücklich, dass das Verfahren ohne teure und aufwändige Bewegungskontrolleinrichtungen auskommt.

US 6791680 B1 offenbart eine Inspektionsanordnung mit einer Anordnung aus einfachen Inspektionsvorrichtungen, die simultan eine Waferoberfläche untersuchen. Jede Vorrichtung nimmt einen Teil der Waferoberfläche auf. Es ist ferner vorgesehen, dass der Wafer oder die Anordnung bewegt werden, so dass die gesamte Waferoberfläche aufgenommen werden können. Die Druckschrift offenbart sowohl eine Bewegung in X-Richtung, als auch eine Bewegung in γ-Richtung um den gesamten Wafer mit den Inspektionsvorrichtungen zu erreichen. Der Wafer ist auf einem Träger angeordnet, der eine Rotation erlaubt. Diese Rotation wird durchgeführt um die Strukturen auf dem Wafer parallel zur Abtastrichtung der Inspektionsvorrichtungen auszurichten.

US 20100165095 A1 offenbart eine Infrarot-Durchlicht Inspektionsanordnung für Wafer. Zwei Zeilenkameras werden in einer Richtung über den Wafer bewegt, während der Wafer eine dazu rechtwinklige Bewegung durchläuft. Mit den zwei Zeilen wird die gesamte Probenbreite abgedeckt.

US 5848123 offenbart ein Verfahren im Bereich der Medizin zur Aufnahme eines Objekts mit einem bewegten Sensor. Die Druckschrift beschreibt, wie durch Binning eine erhöhte Empfindlichkeit unter Inkaufnahme einer geringeren Auflösung erreicht werden kann.

WO 97/13370 offenbart ein Inspektionsverfahren mit einer Kamera in Form eines linearen Dioden Arrays.

US 2003/0218741 A1 offenbart ein Inspektionsgerät mit zwei Inspektionsköpfen unterschiedlicher Auflösung. Die Bilder des Inspektionskopfes mit geringerer Auflösung werden genutzt um die Stellen zu finden, welche mit höherer Auflösung untersucht werden sollten.

### Offenbarung der Erfindung

Es ist Aufgabe der Erfindung, eine Vorrichtung der eingangs genannten Art zu schaffen, die eine Inspektion in kürzerer Zeit mit hoher Genauigkeit ermöglicht.

Erfindungsgemäß wird die Aufgabe dadurch gelöst, dass
(h) die Kameraanordnung mit den Kameras oberhalb der Objekthalterung (12) angeordnet ist, wobei in jede Kamera ein Objektbereich der Objektebene abgebildet wird;
(i) jede der Kameras der Kameraanordnung eine Position erhält, die einem Bildfeld eines Objektbereichs entspricht; und
(j) die in den verschiedenen Aufnahmepositionen aufgenommenen Aufnahmen der Bildfelder unterschiedlicher Kameras der Kameraanordnung zu einem gemeinsamen Gesamtbild zusammengesetzt werden.

Die Aufgabe wird ferner mit einem Verfahren zur Inspektion von flachen Objekten, insbesondere Wafer, gelöst, das dadurch gekennzeichnet ist, dass die Relativbewegung von einer ersten Aufnahmeposition in wenigstens eine weitere Aufnahmeposition eine Drehung der Kameraanordnung oder des Objekts um eine Achse senkrecht zur Objektebene der Kameras.

Bei der Erfindung werden mehrere Kameras in einer Kameraanordnung verwendet. Die Kameras haben innerhalb der Kameraanordnung eine feste Position. Die Kameras werden entsprechend alle gemeinsam von einer Aufnahmeposition in eine andere Aufnahmeposition bewegt. Der Einsatz mehrerer Kameras bewirkt, dass sehr viele Bildpunkte simultan aufgenommen und ausgewertet werden können. Dadurch wird die Inspektionsdauer gegenüber herkömmlichen Anordnungen verkürzt. Die Anordnung erfordert aber nur ein Antriebssystem für die gesamte Kameraanordnung bzw. das Objekt. Die Zeit, die für die Feinjustage erforderlich ist, ist daher ebenfalls kürzer als bei herkömmlichen Anordnungen.

In einer bevorzugten Ausgestaltung der Erfindung sind die Kameras der Kameraanordnung feststehend angeordnet. Dann wird das Objekt von einer Aufnahmeposition in eine weitere Aufnahmeposition bewegt. Es versteht sich, dass auch das Objekt eine feste Position einnehmen kann und die Kameraanordnung von einer Aufnahmeposition in eine weitere Aufnahmeposition bewegt wird.

In einer besonders bevorzugten Ausgestaltung der Erfindung ist das Objekt, die Objekthalterung oder die Kameraanordnung zur Erzeugung der Relativbewegung zwischen Kameraanordnung und Objekt um eine Achse senkrecht zur Objektebene der Kameras drehbar. Da die Bilder bei der Auswertung verarbeitet werden, kann eine Feinjustierung entfallen. Beispielsweise können sechs Kameras verwendet werden. In jede der sechs Kameras wird ein Objektbereich abgebildet. Die Objektbereiche und die Kamerapositionen sind so ausgewählt, dass eine Drehung dazu führt, dass neue, noch nicht aufgenommene Objektbereiche in die Kameras abgebildet werden. Wenn in einer Aufnahmeposition insgesamt etwa die Fläche ein Quadranten des Objekts in die Kameras abgebildet wird, kann mit drei weiteren Aufnahmepositionen das gesamte Objekt inspiziert werden. Voraussetzung ist es, dass die Objektbereiche in unterschiedlichen, relativen Abschnitten innerhalb der Quadranten abgebildet werden. Es ist nicht erforderlich, dass alle Objektebereiche einer Aufnahmeposition im gleichen Quadranten liegen, solange sie sich bei 3 weiteren Drehbewegungen ergänzen und den Quadranten vollständig abdecken.

Die Verwendung von 6 Kameras mit einem Seitenverhältnis von 4:3 bei 4 Aufnahmepositionen hat sich für die Inspektion von derzeit üblichen Wafergrößen als besonders vorteilhaft erwiesen. Es versteht sich jedoch, dass auch andere Verhältnisse einstellbar sind. Diese können in Abhängigkeit von der Zyklenzahl, der Wafergröße, dem Seitenverhältnis der Sensorfläche der Kameras und der gewünschten Auflösung zur Erreichung einer kurzen Inspektionsdauer optimiert werden.

In einer weiteren, vorteilhaften Ausgestaltung der Erfindung weisen die Kameras eine Vielzahl von Detektorelementen (Pixel) auf und das Objekt, die Objekthalterung, die Sensor-Chips mit den Detektorelementen innerhalb der Kameras oder die Kameraanordnung sind kontrolliert mehrfach in der Objektebene um einen Weg verschiebbar, dessen ganzzahliges Vielfaches der Länge der Detektorelemente in Richtung des Verschiebungsweges entspricht. Die Verschiebung im Subpixelbereich kann genutzt werden um ein Bild mit einer Auflösung zu erreichen, die höher ist als die durch die Abmessungen der Detektorelemente vorgegebene Auflösung des Detektors. Vorzugsweise sind das Objekt, die Objekthalterung, die Sensor-Chips mit den Detektorelementen innerhalb der Kameras oder die Kameraanordnung kontrolliert mehrfach in zwei orthogonalen Richtungen in der Objektebene um Wege verschiebbar, deren ganzzahliges Vielfaches der Länge der Detektorelemente in Richtung der zugehörigen Verschiebungswege entspricht. Dadurch kann die Auflösung in zwei Richtungen erhöht werden.

Vorzugsweise weist jede Kamera der Kameraanordnung eine eigene Abbildungsoptik und einen eigenen Detektor auf. Dabei können die Abbildungen im Wesentlichen telezentrisch sein.

In einer weiteren Ausgestaltung der Erfindung sind ein oder mehrere Farb- und/oder Infrarotfilter in den Abbildungsstrahlengängen vorgesehen. Alternativ können farbsensitive Detektoren eingesetzt werden.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig.1: ist eine schematische Darstellung einer Inspektionsvorrichtung mit mehreren Kameras.
- Fig.2: ist eine Draufsicht auf einen Wafer und illustriert die Anordnung von Bildfeldern in einem Quadranten des Wafers
- Fig.3: zeigt ein Beispiel für eine Anordnung aus Figur 2 in einer ersten Aufhahmeposition.
- Fig.4a-e: illustriert, wie eine Verschiebung des Wafers im Subpixelbereich erfolgt.
- Fig.5a-c: illustriert anhand einer Computersimulation, wie das Bild eines Wafers rekonstruiert wird.
- Fig.6: zeigt ein Detail aus Figur 5.

### Beschreibung des Ausführungsbeispiels

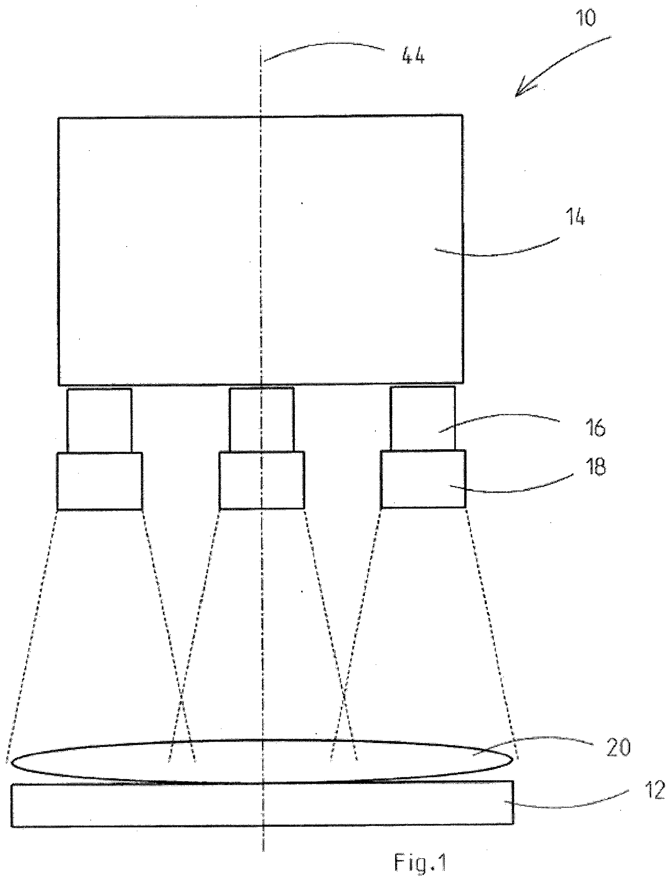

Figur 1 ist eine schematische Darstellung eines Inspektionsgerätes, welches allgemein mit 10 bezeichnet ist. Das Inspektionsgerät 10 weist einen Tisch 12 auf. Auf den Tisch 12 werden Wafer 20 oder andere zu untersuchende Objekte mittels eines Handling-Systems (nicht dargestellt) aufgelegt. Oberhalb des Tisches 12 ist eine Kameraanordnung 14 angeordnet. Die Kameraanordnung 14 ist gehäusefest und unbeweglich montiert. Die Kameraanordnung weist 6 Kameras 16 auf. Jede der Kameras 16 ist mit einem eigenen Detektor und einer eigenen Abbildungsoptik 18 versehen. Im vorliegenden Ausführungsbeispiel ist das Abbildungsverhältnis etwa 1:2. Die in den Kameras 16 verwendeten Detektoren sind identisch und weisen 5344 x 4008 also insgesamt 21,4 Mio. Detektorelemente pro Kamera auf. Das Seitenverhältnis der Detektoren ist 4:3, welches dem Mittelbildformat von 28mm x 37 mm entspricht. Jedes Detektorelement hat eine Seitenlänge von 7 µm.

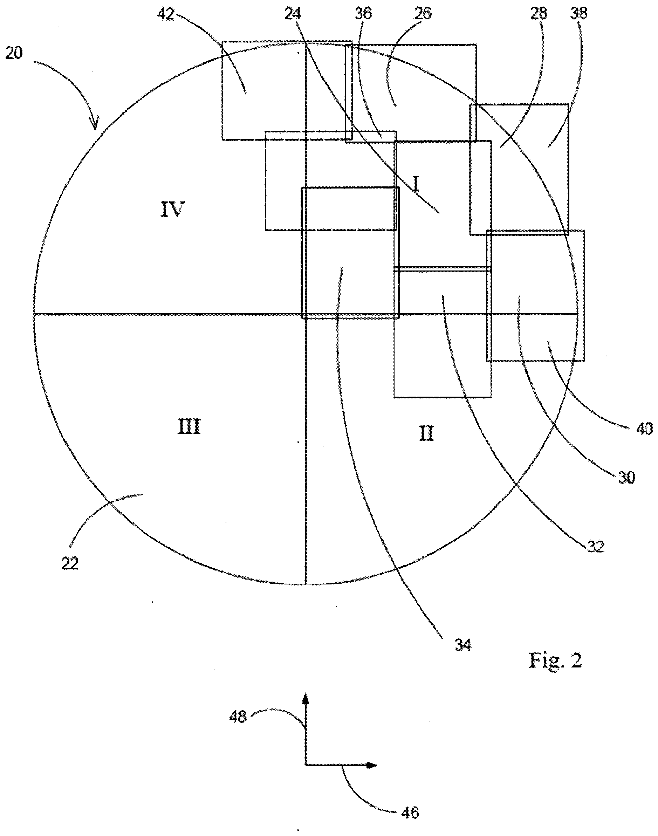

Figur 2 entspricht einer Draufsicht auf einen typischen Wafer 20. Der Wafer 20 lässt sich in vier Quadranten 22 mit identischer Form und Fläche unterteilen. Die Quadranten 22 sind mit I, II, III und IV bezeichnet. Es kann gezeigt werden, dass die Fläche eines solchen Quadranten 22 mit den 6 Kameras 16 der Kameraanordnung 14 theoretisch vollständig erfasst werden kann. Mit anderen Worten: Es gibt wenigstens eine Anordnung von 6 Bildfeldern 24, 26, 28, 30, 32 und 34, welche einen Quadranten 22 des Wafers 20 lückenlos abdeckt, ohne zu viel überlappende Flächen 36 und ungenutzte Detektorfläche 38 außerhalb des Wafers zu erhalten. Bildfelder 40, die auf der einen Seite des Quadranten herausragen, decken flächenmäßig die auf der anderen Seite fehlende Fläche 42 ab.

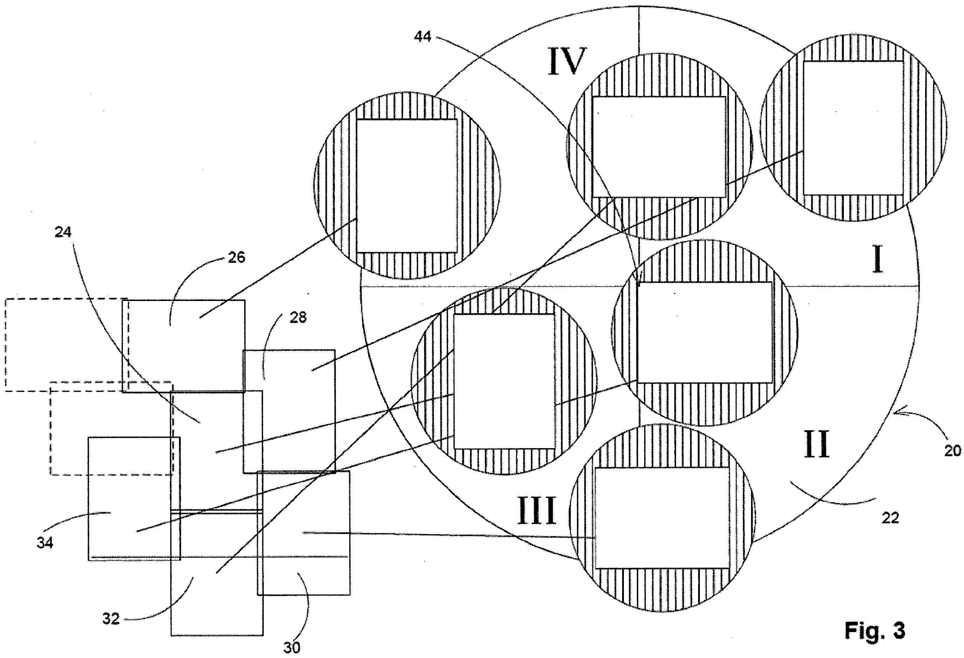

Diese Erkenntnis wird für die Auswahl der Kamerapositionen innerhalb der Kameraanordnung 14 genutzt. Jede der sechs Kameras erhält eine Position, die einem oben beschriebenen Bildfeld 24, 26, 28, 30, 32 oder 34 entspricht. Dabei werden jedoch nicht alle Bildfelder aus dem gleichen Quadranten in die Kameras abgebildet. Vielmehr sind die Kameras oberhalb der verschiedenen Quadranten über dem gesamten Wafer verteilt angeordnet. Ein Beispiel für eine solche Anordnung in einer ersten Aufnahmeposition ist in Figur 3 dargestellt. Dadurch wird erreicht, dass genügend Platz für die Objektive, Kameras, Fixierungen etc. vorhanden ist. Der für jede Kamera-Objektiv-Kombination zur Verfügung stehende Bauraum ist durch einen Kreis repräsentiert.

Die Bildfläche 28 wird mit einer Kamera aufgenommen, die in der ersten Aufnahmeposition, die in Figur 3 dargestellt ist, oberhalb des Quadranten I angeordnet ist. Die Bildfläche 24 wird mit einer Kamera aufgenommen, die in der ersten Aufnahmeposition oberhalb des Quadranten III angeordnet ist. Die Bildfläche 26 wird mit einer Kamera aufgenommen, die in der ersten Aufnahmeposition oberhalb des Quadranten IV angeordnet ist. Die Bildfläche 30 wird mit einer Kamera aufgenommen, die in der ersten Aufnahmeposition oberhalb der Quadranten II und III angeordnet ist. Die Bildfläche 32 wird mit einer Kamera aufgenommen, die in der ersten Aufnahmeposition oberhalb des Quadranten I und IV angeordnet ist. Die Bildfläche 34 wird mit einer Kamera aufgenommen, die in der ersten Aufnahmeposition oberhalb des Quadranten III angeordnet ist.

Nach Aufnahme der Bilder in der ersten Aufnahmeposition wird der Tisch 12 um seine Mittenachse 44 senkrecht zur Waferoberfläche gedreht. Im vorliegenden Ausführungsbeispiel, bei dem die Aufteilung des Wafers in vier Quadranten durchgeführt wurde, erfolgt die Drehung entsprechend um 90°. Bei einer Aufteilung beispielsweise in Sextanten, erfolgt die Drehung um 60°. Nach der 90°-Drehung im Uhrzeigersinn ist die Kamera mit dem Bildfeld 24 oberhalb des Quadranten II angeordnet. Die weiteren fünf Kameras sind entsprechend ebenfalls oberhalb des jeweils benachbarten Quadranten angeordnet. Dann werden erneut Bilder in der zweiten Aufnahmeposition aufgenommen. Dies wird insgesamt drei Mal wiederholt, bis jede Kamera 16 einmal oberhalb jedes Quadranten 22 positioniert war.

Es werden auf diese Weise bei vier Aufnahmepositionen und sechs Kameras 16 insgesamt 4 x 6= 24 Bilder erzeugt. Diese werden bei der Verarbeitung mit einer Software zu einem Gesamtbild zusammengesetzt. Bei paralleler Verarbeitung der von den Kameras erzeugten Daten wird das Bild sehr schnell erzeugt. Die einzige Bewegung für den Vorgang ist die Drehbewegung des Tischs. Da mehrere Kameras 16 zur Verfügung stehen, die eine Bestimmung der Kameraposition zum Wafer 20 erlauben, ist keine Feinjustierung der Tischposition bzw. des Drehwinkels nach der Drehung erforderlich. Dadurch wird die Inspektionsdauer weiter verkürzt.

Da die gesamte Aufnahmefolge nur 3 Bewegungen erfordert, lässt sie sich sehr schnell, z.B. innerhalb von etwa 10 s ausführen. Für diese Grundauflösung ist somit ein sehr hoher Durchsatz realisierbar.

Mit dem dargestellten Ausführungs-Beispiel lässt sich unter Verwendung handelsüblicher Kameras, z. B., 22MP-Kamera eine Pixel-Auflösung von z.B. ca. 14µm erreichen. Das Verfahren ist durch geeignet Wahl von Anzahl und Anordnung der Kameras sowie geeignet gewählte Objektive auf jede beliebige Objektform und Größe skalierbar. Insbesondere kann es an alle in der Halbleiterindustrie eingesetzten und zukünftig geplanten Wafergrößen angepasst werden.

Das vorliegende Inspektionsgerät 10 erlaubt die Erzeugung eines Waferbildes mit besonders hoher Auflösung. Hierzu wird der Wafertisch 12 mit dem Wafer 20 in jeder Aufnahmeposition vier Mal lateral nach rechts in Richtung des Pfeils 46 in Figur 2 und vier Mal nach oben in der Darstellung in Richtung des Pfeils 48 in Figur 2 bewegt und ein Bild aufgenommen. Für die Bewegung kann ein Piezo-Antrieb eingesetzt werden. Die Bewegung erfolgt um einen Weg, der ein Viertel der Länge eines Detektorelements beträgt. Auf diese Weise werden mit jedem Detektorelement in jeder Aufnahmeposition vier Werte erzeugt. Jeder Wert repräsentiert einen Mittelwert des Grauwertes an der jeweiligen Aufnahmeposition. Aus dem so gewonnenen Bildstapel von um Subpixelschritte verschobenen Bildern lässt sich auf mathematischem Wege ein Bild mit der Auflösung der Subpixelschrittweite berechnen.

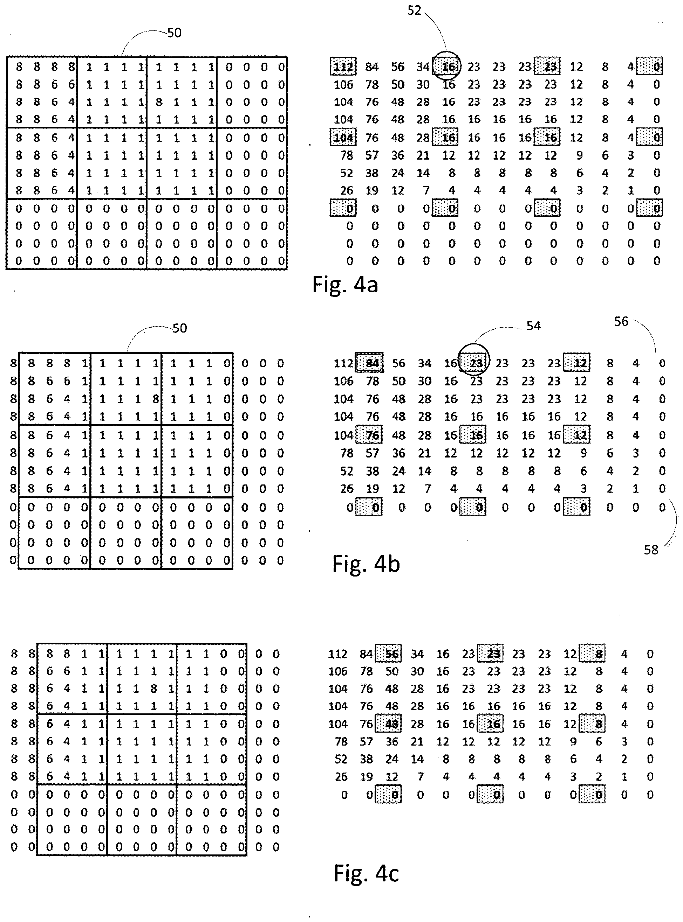

Das Aufnahme-Verfahren ist in Fig.4a-e anhand eines Zahlenbeispiels dargestellt. Nimmt man an, dass jedes Objektiv 18 ein Bild mit einer Auflösung von einem Viertel der Größe eines Detektorelements auf dem Detektor abbildet, so erfasst jeder Detektor in der Ausgangsstellung die in Figur 4a links dargestellten Grauwerte. Dabei ist das Detektorelement als Quadrat 50 dargestellt. Die Grauwerte infolge der Subpixelverschiebung sind als je 4x4 Zahlen 52 innerhalb des Quadrats bezeichnet. Die Kamera integriert jeweils über diese 4x4 Werte, so dass das erste Kamerabild aus den in der rechten Seite in Figur 4a hervorgehobenen Werten 52, oben links in den Feldern 50 besteht.

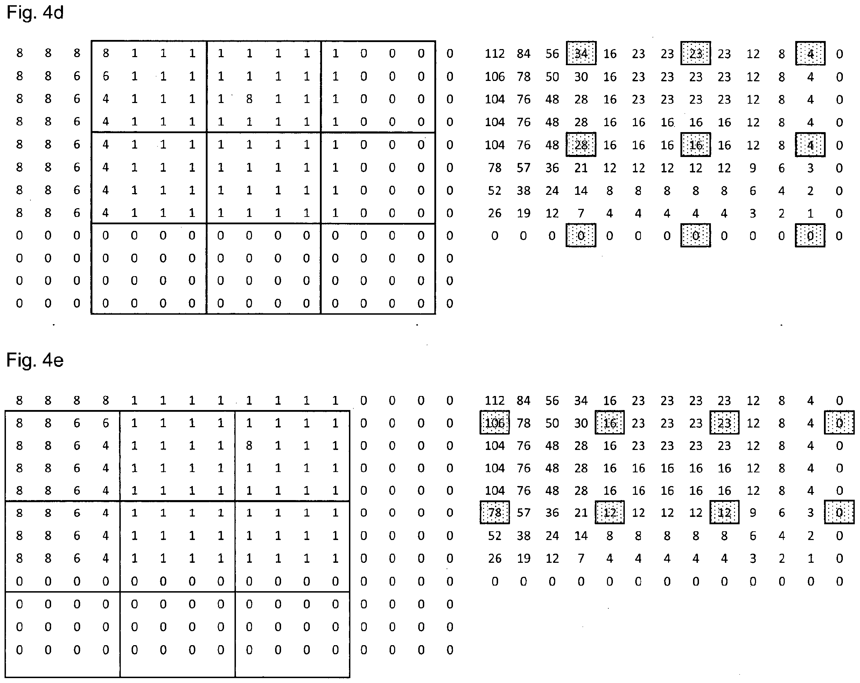

Nun wird der Wafer 20 so zur Kamera 16 verschoben, dass das Abbild um ¼ eines Detektorelements nach links wandert. Die Kamera 16 nimmt nun ein Bild auf, wie in Figur 4b dargestellt. Die rechts grau unterlegten Werte 54 bilden das 2. Kamerabild. In Figur 4c und 4d sind die Aufnahmen für das 3. und 4. Bild dargestellt. In Figur 4e ist das 5. Bild gezeigt, welches nach demselben Prinzip in vertikaler Verschiebungsrichtung aufgenommen wird. Insgesamt sind in diesem Beispiel 4x4 = 16 Bilder an jeweils um ¼ der Länge eines Detektorelements versetzten Positionen aufzunehmen.

Der so aufgenommene Bildstapel wird in der rechten Seite von Fig. 4a bis 4e zu einem Bild zusammengesetzt. Der Bildstapel stellt eine 2-dimensionale, gleitende Mittelwertbildung der originalen Grauwerte mit einer Breite der Glättung von 4 Werten dar. Aus einer solchen Mittelung lässt sich das Originalwertegitter auf der linken Seite der Figuren 4a bis 4e vollständig rekonstruieren. Hierzu werden an mindestens zwei Randbereichen 56 und 58, d.h. je einmal vertikal und horizontal, eine letzte Zeile und eine letzte Spalte mit definiertem, bekannten Grauwerten aufgenommen. Im vorliegenden Fall sind diese Grauwerte 0.

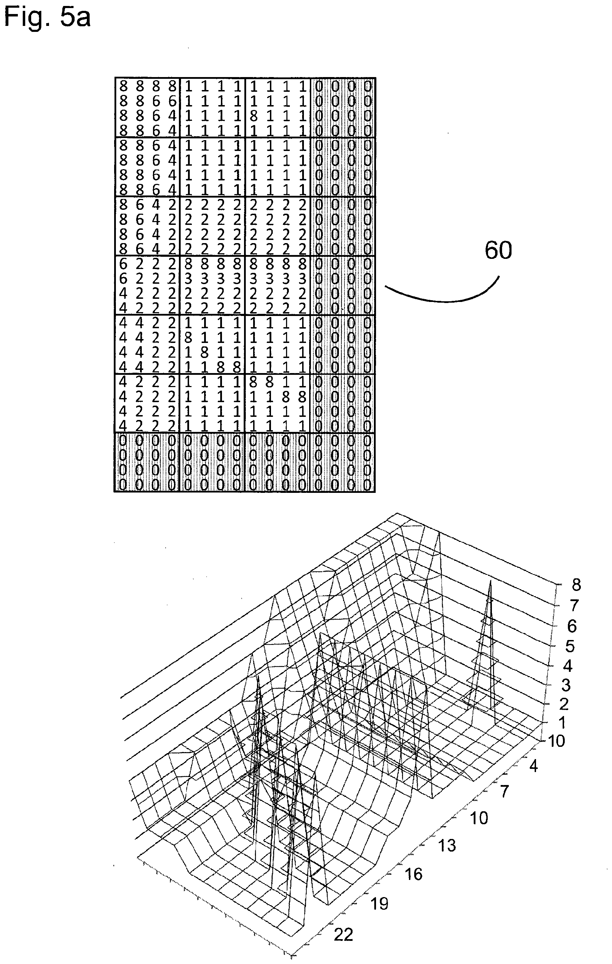

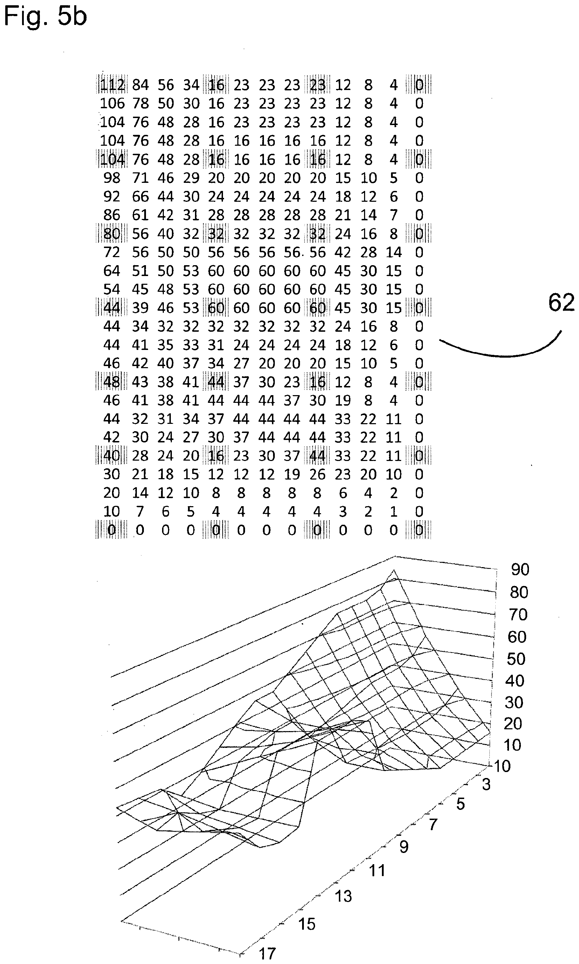

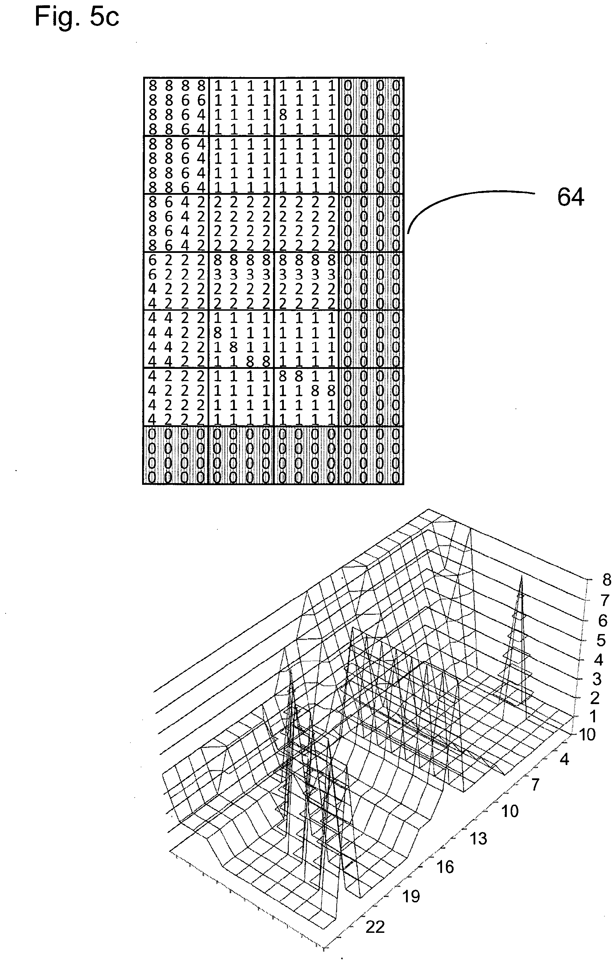

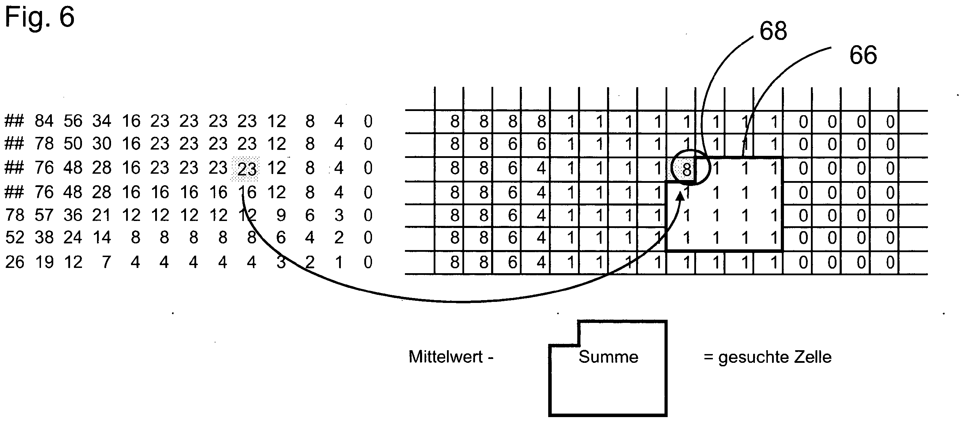

Die Rekonstruktion startet an diesen bekannten Rändern 56 und 58 und stellt mathematisch eine einfache 2-dimensionale Ableitungsberechnung dar. Der nach der Ableitung noch unbekannte Offset wird durch die bekannten Ränder errechnet. Dies ist am Beispiel einer Simulation in Abb. 5 dargestellt. In Figur 5a ist das Originalbild 60 dargestellt. In Figur 5b ist das aus den 16 von der Kamera aufgenommenen Einzelbildern zusammengesetzte Mittelwertbild 62 dargestellt. In Figur 5c ist das rekonstruierte Bild 64 dargestellt. Der Wert jedes einzelnen Detektorelements im hochaufgelösten rekonstruierten Bild 64 ergibt sich aus dem entsprechenden Wert im Mittelwertbild 62 abzüglich der in den bereits berechneten Werten in den 15 Zellen 66 in den 4 Reihen rechts und unterhalb des gesuchten Detektorelements 68, wie in Fig.6 gezeigt.

Unter Nutzung des dargestellten Aufnahmeverfahrens ist es möglich, die effektive Auflösung des Bildes durch die geeignet gewählte Zahl von Subpixelschritten bis zur Auflösungsgrenze des Objektivs zu treiben. Die Kameras benötigen keine um ein Vielfaches höhere Zahl an Detektorelementen und müssen nicht aufwändig über den Wafer gescannt werden.

Es ist eine einfache und sehr flexible Auswahl zwischen sehr hohem Durchsatz und sehr hoher Auflösung möglich. Zur Erreichung eines hohen Durchsatzes werden nur die 4x6 "Grundbilder" ohne Subpixelverschiebung aufgenommen. Zur Erreichung einer sehr hohen Auflösung werden zusätzlich in jeder Vierteldrehungsstellung des Wafers die Subpixel-verschobenen Bilder aufgenommen.

Im vorliegenden Ausführungsbeispiel haben die Kameras eine hohe Graustufenauflösung und geringes Rauschen. Dabei gelingt es durch die sorgfältige Auswertung der Graustufen Defekte unterhalb der Objektivauflösung zu detektieren, auch wenn diese im optischen Sinne nicht mehr aufgelöst werden. Bei Kameras mit 12 bit Auflösung stehen effektiv mehr als 4000 Graustufen zur Verfügung. Bei einem Rauschniveau der Kamera unterhalb von 10 Graustufen kann man einen beispielsweise als quadratisch angenommenen Defekt mit einem Kontrast von z.B. 30 Graustufen zur Umgebung noch detektieren.

Im oben beschriebenen, einfachen Ausführungsbeispiel wurden Schwarzweiß-Kameras eingesetzt. Bei anspruchsvollen Inspektionen mit gleichzeitig hohem Durchsatzanspruch werden 3-CCD Kameras oder Schwarzweiß-Kameras mit zusätzlichen, ganzflächigen Farbfiltern für besonders hohe Flexibilität eingesetzt. In letztgenanntem Fall kann zum Beispiel ein Filterwechsel 2, 3 oder mehr Filter für jede Kamera tragen. Diese können dann in einem Schritt gleichzeitig vor die Kamerasensoren bewegt werden. Durch die separate, von der Kamera getrennte Einbringung der Filter können die Wellenlängenbereiche auf die jeweilige Applikation abgestimmt werden. Z.B. ist es so möglich neben den üblichen Rot, Grün, Blau-Filtern auch solche im nahen Infrarot einzusetzen, um z.B. dünne Siliziumschichten teilweise durchstrahlen zu können.

Die nach den vorgenannten Schritten aufgenommenen Bilder können mit allen, üblichen und bekannten Verfahren zur Defekterkennung aus Bilddaten weiter verarbeitet werden. Insbesondere können die üblichen Verfahren des Vergleichs zu einer Referenz oder des lokalen Vergleichs oder des Vergleichs mit einer aus der Produktionsdatenbasis generierten Referenz genutzt werden.

So kann für verschiedene Anwendungsfälle zunächst ein Farbbild erstellt werden, welches anschließend mit einem Referenzbild verglichen wird. Ebenso kann besonders vorteilhaft aufgrund der großen Bildfelder ein lokaler Bildvergleich mit widerkehrenden Strukturen im selben Bild erfolgen. Dieses Verfahren ist besonders robust gegen Helligkeits- und Farbschwankungen der benutzten Lichtquellen sowie gegen Positionierungsungenauigkeiten des zu untersuchenden Wafers.

Alternativ können auch die ermittelten Teilbilder zunächst in den einzelnen Farbkanälen auf Defektsignaturen untersucht werden, um dann z.B. nur Defekte detailliert auszuwerten, die in mindestens 2 oder mindestens 3 der Farbkanäle sichtbar sind.

In einem alternativen Ausführungsbeispiel wird eine Kameraanordnung mit nur einer Kamera verwendet. Die Kamera wird nicht rotiert, sondern wie oben bereits beschrieben lediglich um einen Weg verschoben, der kleiner als eine Pixellänge ist. Hierzu ist beispielsweise ein Piezoelement geeignet. Der Verschiebeweg kann dabei sehr genau eingestellt werden. Das Element ist lediglich für die Subpixelverschiebung erforderlich und wird nicht für die Bewegung des Objekts im übrigen verwendet. Anders als bei den herkömmlichen Geräten wird so eine besonders hohe Einstellgenauigkeit und hohe Auflösung bei geringen Kosten erreicht. Das hochaufgelöste Bild wird wie oben beschrieben ermittelt.

Bei einem weiteren, alternativen Ausführungsbeispiel werden mehrere stationäre Kameras verwendet, die um einen Betrag im Subpixelbereich gegeneinander verschoben angeordnet sind.

Man erkennt, dass die um einen Betrag im Subpixelbereich verschobenen Bilder entweder durch zeitlich nacheinander erfolgende Aufnahmen und Verschiebung des Objekts bzw. der Kamera erreicht werden kann und/oder gleichzeitige Aufnahmen mit mehreren Kameras, die um einen Betrag im Subpixelbereich gegeneinander verschoben sind. In jedem Fall werden mehrere Bilder des gleichen Objektbereichs aufgenommen, die rechnerisch zu einem Bild mit erhöhter Auflösung zusammengesetzt werden können.

Alle diese Modifikationen stellen keine Abweichung vom Erfindungsgedanken dar und richten sich vor allem nach der speziellen Anforderung des jeweiligen Anwendungsfalles.

Die vorstehenden Ausführungen wurden zum besseren Verständnis beispielhaft anhand von konkreten Angaben bezüglich der Anzahl der Bildpunkte, der Größe der Abschnitte und der Bildung von Mittelwerten und Schwellwerten gemacht. Es versteht sich, dass es sich hierbei lediglich um Ausführungsbeispiele handelt. Die Erfindung kann ebenso mit anderen Werten verwirklicht werden.

## Patentansprüche

1. Vorrichtung zur Makroinspektion von flachen Objekten (20), insbesondere Wafer, enthaltend
(a) eine Objekthalterung (12);
(b) eine Kameraanordnung (14) mit einer Kamera (16) zur Aufnahme eines Bildes zumindest eines Teiles des Objekts (20);
(c) eine Antriebsanordnung zur Erzeugung einer Drehbewegung zwischen der Kameraanordnung (14) und dem Objekt (20) von einer ersten Aufnahmeposition in wenigstens eine weitere Aufnahmeposition; wobei
(d) die Kameraanordnung (14) wenigstens eine weitere Kamera (16) aufweist;
(e) die in unterschiedliche Kameras (16) abgebildeten Objektbereiche zumindest teilweise unterschiedlich sind, wobei alle Kameras (16) gemeinsam nur einen Teil des gesamten Inspektionsbereichs des Objekts (20) gleichzeitig erfassen;
(f) durch die mit der Antriebsanordnung erzeugte Drehbewegung zwischen Kameraanordnung (14) und Objekt (20) jeder Objektpunkt des gesamten Inspektionsbereichs zumindest einmal in eine der Kameras (16) abbildbar ist, und
(g) das Objekt (20), die Objekthalterung (12) oder die Kameraanordnung (14) um eine Achse (44) senkrecht zur Objektebene der Kameras (16) drehbar ist,
**dadurch gekennzeichnet, dass**
(h) die Kameraanordnung mit den Kameras oberhalb der Objekthalterung (12) angeordnet ist, wobei in jede Kamera ein Objektbereich der Objektebene abgebildet wird;
(i) jede der Kameras der Kameraanordnung eine Position erhält, die einem Bildfeld eines Objektbereichs entspricht; und
(j) die in den verschiedenen Aufnahmepositionen aufgenommenen Aufnahmen der Bildfelder unterschiedlicher Kameras der Kameraanordnung zu einem gemeinsamen Gesamtbild zusammengesetzt werden.

2. Vorrichtung nach Anspruch 1, **dadurch gekennzeichnet, dass** die Kameras (16) der Kameraanordnung (14) feststehend angeordnet sind.

3. Vorrichtung nach Anspruch 1, **dadurch gekennzeichnet, dass** die Kameras (16) eine Vielzahl von Detektorelementen (Pixel) aufweisen und das Objekt (20), die Objekthalterung (12), die Sensor-Chips mit den Detektorelementen innerhalb der Kameras (16) oder die Kameraanordnung (14) kontrolliert mehrfach in der Objektebene um einen Weg verschiebbar sind, dessen ganzzahliges Vielfaches der Länge der Detektorelemente in Richtung des Verschiebungsweges entspricht.

4. Vorrichtung nach Anspruch 3, **dadurch gekennzeichnet, dass** das Objekt (20), die Objekthalterung (12), die Sensor-Chips mit den Detektorelementen innerhalb der Kameras (16) oder die Kameraanordnung (14) kontrolliert mehrfach in zwei orthogonalen Richtungen in der Objektebene um Wege verschiebbar sind, deren ganzzahliges Vielfaches der Länge der Detektorelemente in Richtung der zugehörigen Verschiebungswege entsprechen.

5. Vorrichtung nach einem der vorgehenden Ansprüche, **dadurch gekennzeichnet, dass** jede Kamera (16) der Kameraanordnung (14) eine eigene Abbildungsoptik (18) und einen eigenen Detektor aufweist.

6. Vorrichtung nach einem der vorgehenden Ansprüche, **dadurch gekennzeichnet, dass** die Abbildungen im Wesentlichen telezentrisch sind.

7. Vorrichtung nach einem der vorgehenden Ansprüche, **dadurch gekennzeichnet, dass** ein oder mehrere Farb- und/oder Infrarotfilter in den Abbildungsstrahlengängen vorgesehen sind.

8. Vorrichtung nach einem der vorgehenden Ansprüche, **dadurch gekennzeichnet, dass** ein oder mehrere Farb- und/oder Infrarotfilter in den Beleuchtungsstrahlengängen vorgesehen sind.

9. Verfahren zur Inspektion von flachen Objekten (20), insbesondere Wafer, mit den Schritten:
(a) gleichzeitiges Aufnehmen von Bildern zumindest teilweise unterschiedlicher Objektbereiche mit unterschiedlichen Kameras (16) einer Kameraanordnung (14), wobei alle Kameras (16) gemeinsam nur einen Teil des gesamten Inspektionsbereichs des Objekts (20) gleichzeitig erfassen;
(b) Erzeugen einer Drehbewegung zwischen der Kameraanordnung (14) und dem Objekt (20) um eine Achse (44) senkrecht zur Objektebene der Kameras (16) von einer ersten Aufnahmeposition in wenigstens eine weitere geeignete Aufnahmeposition, bei welcher ein weiterer Teil des Inspektionsbereichs erfasst wird; und
(c) Wiederholen der Schritte (a) und (b) bis jeder Objektpunkt des gesamten Inspektionsbereichs zumindest einmal in eine der Kameras (16) abgebildet ist, **dadurch gekennzeichnet, dass**
(d) die Kameraanordnung mit den Kameras oberhalb der Objekthalterung (12) angeordnet ist, wobei in jede Kamera ein Objektbereich der Objektebene abgebildet wird;
(e) jede der Kameras der Kameraanordnung eine Position erhält, die einem Bildfeld eines Objektbereichs entspricht; und
(f) die in den verschiedenen Aufnahmepositionen aufgenommenen Aufnahmen der Bildfelder unterschiedlicher Kameras der Kameraanordnung zu einem gemeinsamen Gesamtbild zusammengesetzt werden.

10. Verfahren nach Anspruch 9, **dadurch gekennzeichnet, dass** die Kameras (16) eine Vielzahl von Detektorelementen (Pixel) aufweisen und die Objekthalterung (12), die Sensor-Chips mit den Detektorelementen innerhalb der Kameras (16) oder die Kameraanordnung (14) vor Ausführung von Schritt (b) zusätzlich kontrolliert mehrfach in der Objektebene um einen Weg verschoben werden, dessen ganzzahliges Vielfaches der Länge der Detektorelemente in Richtung des Verschiebungsweges entspricht.

11. Verfahren nach Anspruch 10, **dadurch gekennzeichnet, dass** der Weg der zusätzlichen Verschiebung jeweils ein Viertel der Länge der Detektorelemente in Richtung des Verschiebungsweges ist.

12. Verfahren nach Anspruch 10 oder 11, **dadurch gekennzeichnet, dass** die zusätzliche Verschiebung in zwei orthogonalen Richtungen erfolgt.

13. Verfahren nach einem der Ansprüche 9 bis 12, **dadurch gekennzeichnet, dass** das Objekt (20), die Objekthalterung (12) oder die Kameraanordnung (14) in Schritt (b) um 90° gedreht werden.

## Claims

1. Device for macro inspection of flat objects (20), in particular wafers, comprising
(a) an object holder (12)
(b) a camera assembly (14) with a camera (16) for taking an image of at least a portion of the object (20);
(c) a driving assembly for the generation of a rotational movement between the camera assembly (14) and the object (20) from a first imaging position to at least one further imaging position; wherein
(d) the camera assembly (14) comprises at least one further camera (16);
(e) the object ranges imaged by different cameras (16) are at least partly different, wherein all cameras (16) together simultaneously detect only a portion of the same inspection range of the object (20);
(f) each object point of the entire inspection range is imaged at least once by one of the cameras due to the rotational movement between the camera assembly (14) and the object (20) generated with the driving assembly; and
(g) the object (20), the object holder (12) or the camera assembly (14) is rotatable about an axis (44) perpendicular to the object plane of the cameras (16), **characterized in that**
(h) the camera assembly with the cameras is arranged above the object holder (12), wherein an object range of the object plane is imaged on each camera;
(i) each of the cameras of the camera assembly has a position corresponding to an image field of the object range; and
(j) the images of the image fields of different cameras of the camera assembly taken in the different imaging positions are assembled to one common overall image.

2. Device according to claim 1, **characterized in that** the cameras (16) of the camera assembly (14) are statically mounted.

3. Device according to claim 1, **characterized in that** the cameras (16) are provided with a plurality of detector elements (Pixels) and the object, the object holder (12) the sensor chips with the detector elements inside the cameras (16) or the camera assembly (14) are controlled shiftable in the object plane by a distance, where a multiple of such distance corresponds to the length of the detector elements in the direction of the shifting distance.

4. Device according to claim 3, **characterized in that** the object (20), the object holder (12), the sensor-chips with the detector elements inside the cameras (16) or the entire camera assembly (14) are shiftable several times in two perpendicular direction in the object plane by distances where a multiple of such distances corresponds to the length of the detector elements in the direction of the corresponding shifting distances.

5. Device according to any of the preceding claims, **characterized in that** each camera (16) of the camera assembly (14) is provided with its own imaging optical assembly (18) and its own detector.

6. Device according to any of the preceding claims, **characterized in that** the images are essentially telecentric.

7. Device according to any of the preceding claims, **characterized in that** one or more color- and/or infrared filters are provided in the imaging paths of light.

8. Device according to any of the preceding claims, **characterized in that** one or more color- and/or infrared filters are provided in the illumination paths of light.

9. Method for inspection of flat objects (20), in particular wafers, comprising the steps of
(a) simultaneously taking images of at least partly different object ranges with different cameras (16) of a camera assembly (14), wherein all cameras (16) together simultaneously detect only a portion of the entire inspection range of the object (20);
(b) generating a rotational movement between the camera assembly (14) and the object (20) from a first imaging position to at least one further suitable imaging position, where a further portion of the inspection range is detected; and
(c) repeating steps (a) and (b) until each object joint of the entire inspection range is imaged at least once by one of the cameras (16),
**characterized in that**
(h) the camera assembly with the cameras is arranged above the object holder (12), wherein an object range of the object plane is imaged on each camera;
(i) each of the cameras of the camera assembly has a position corresponding to an image field of the object range; and
(j) the images of the image fields of different cameras of the camera assembly taken in the different imaging positions are assembled to one common overall image.

10. Method according to claim 9, **characterized in that** the cameras (16) are provided with a plurality of detector elements (Pixels) and the object holder (12) the sensor chips with the detector elements inside the cameras (16) or the entire camera assembly (14) are shifted in the object plane by a distance, where a multiple of such distance corresponds to the length of the detector elements in the direction of the shifting distance before carrying out step (b).

11. Method according to claim 10, **characterized in that** the distance of each additional shift is a quarter of the length of the detector elements in the direction of the shift.

12. Method according to claim 10 or 11, **characterized in that** the additional shift is carried out in two perpendicular directions.

13. Method according to any of claims 9 to 12, **characterized in that** the object (20), the object holder (12) or the camera assembly (14) is rotated in step (b) about an angle of 90°.

## Revendications

1. Dispositif destiné à la macro-inspection d'objets plats (20), notamment de galettes, comprenant
(a) une fixation pour objets (12) ;
(b) une disposition de caméras (14) munie d'une caméra (16) destinée à prendre une vue d'un moins une partie de l'objet (20) ;
(c) une disposition d'entraînement destinée à produire un déplacement rotatif entre la disposition de caméras (14) et l'objet (20) d'une première position de prise de vue dans au moins une position de prise de vue supplémentaire ;
(d) la disposition de caméras (14) présentant au moins une caméra supplémentaire (16) ;
(e) les zones d'objet reproduites dans différentes caméras (16) sont au moins partiellement différentes, toutes les caméras (16) réunies ne saisissant simultanément qu'une partie de toute la zone d'inspection de l'objet (20) ;
(f) chaque point d'objet de toute la zone d'inspection est susceptible d'être reproduit au moins une fois dans l'une des caméras (16) par le déplacement rotatif généré à l'aide de la disposition d'entraînement entre la disposition de caméras (14) et l'objet (20), et
(g) l'objet (20), la fixation pour objets (12) ou la disposition de caméras (14) est susceptible de tourner autour d'un axe (44) perpendiculairement au plan d'objet des caméras (16),
**caractérisé en ce que**
(h) la disposition de caméras munie des caméras est disposée au-dessus de la fixation pour objets (12), une zone d'objet du plan d'objet étant reproduite dans chaque caméra ;
(i) chacune des caméras de la disposition de caméras reçoit une position correspondant à un champ d'image d'une zone d'objet ; et
(j) les vues des champs d'image de différentes caméras de la disposition de caméras, prises dans les différentes positions de prise de vue, sont réunies en une vue d'ensemble commune.

2. Dispositif selon la revendication 1, **caractérisé en ce que** les caméras (16) de la disposition de caméras (14) sont disposées de manière fixe.

3. Dispositif selon la revendication 1, **caractérisé en ce que** les caméras (16) présentent plusieurs éléments détecteurs (pixels) et l'objet (20), la fixation pour objet (12), les puces de capteur munies des éléments détecteurs sont susceptibles de se déplacer à l'intérieur des caméras (16) ou la disposition de caméras (14) est susceptible de se déplacer plusieurs fois de manière contrôlée dans le plan d'objet sur une trajectoire correspondant au multiple entier de la longueur des éléments détecteurs dans le sens de la trajectoire de déplacement.

4. Dispositif selon la revendication 3, **caractérisé en ce que** l'objet (20), la fixation pour objet (12), les puces de capteur munies des éléments détecteurs sont susceptibles de se déplacer à l'intérieur des caméras (16) ou la disposition de caméras (14) est susceptible de se déplacer plusieurs fois de manière contrôlée dans deux sens orthogonaux dans le plan d'objet sur des trajectoires correspondant au multiple entier de la longueur des éléments détecteurs dans le sens des trajectoires de déplacement associées.

5. Dispositif selon l'une quelconque des revendications précédentes, **caractérisé en ce que** chaque caméra (16) de la disposition de caméras (14) présente son propre système optique de reproduction (18) et son propre détecteur.

6. Dispositif selon l'une quelconque des revendications précédentes, **caractérisé en ce que** les reproductions sont essentiellement télécentriques.

7. Dispositif selon l'une quelconque des revendications précédentes, **caractérisé en ce qu'**un ou plusieurs filtres couleurs et/ou infrarouges sont prévus dans les marches de rayons de reproduction.

8. Dispositif selon l'une quelconque des revendications précédentes, **caractérisé en ce qu'**un ou plusieurs filtres couleurs et/ou infrarouges sont prévus dans les marches de rayons d'illumination.

9. Procédé destiné à l'inspection d'objets plats (20), notamment de galettes, présentant les étapes de :
(a) prise de vues simultanée au moins partiellement de différentes zones d'objet à l'aide de différentes caméras (16) d'une disposition de caméras (14), toutes les caméras (16) réunies ne saisissant simultanément qu'une partie de toute la zone d'inspection de l'objet (20) ;
(b) génération d'un déplacement rotatif entre la disposition de caméras (14) et l'objet (20) autour d'un axe (44) perpendiculairement au plan d'objet des caméras (16) d'une première position de prise de vue dans au moins une position de prise de vue appropriée supplémentaire dans laquelle une partie supplémentaire de la zone d'inspection est saisie ; et
(c) réitération des étapes (a) et (b) jusqu'à ce que chaque point d'objet de toute la zone d'inspection soit reproduit au moins une fois dans l'une des caméras (16),
**caractérisé en ce que**
(d) la disposition de caméras munie des caméras est disposée au-dessus de la fixation pour objet (12), une zone d'objet du plan d'objet étant reproduite dans chaque caméra ;
(e) chacune des caméras de la disposition de caméras reçoit une position correspondant à un champ d'image de la zone d'objet ; et
(f) les vues des champs d'image de différentes caméras de la disposition de caméras, prises dans les différentes positions de prise de vue, sont réunies en une vue d'ensemble commune.

10. Procédé selon la revendication 9, **caractérisé en ce que** les caméras (16) présentent plusieurs éléments détecteurs (pixels) et la fixation pour objet (12), les puces de capteur munies des éléments détecteurs sont susceptibles de se déplacer à l'intérieur des caméras (16) ou la disposition de caméras (14) est susceptible de se déplacer en outre, avant la mise en œuvre de l'étape (b), plusieurs fois de manière contrôlée dans le plan d'objet sur une trajectoire correspondant au multiple entier de la longueur des éléments détecteurs dans le sens de la trajectoire de déplacement.

11. Procédé selon la revendication 10, **caractérisé en ce que** la trajectoire du déplacement supplémentaire représente à chaque fois un quart de la longueur des éléments détecteurs dans le sens de la trajectoire de déplacement.

12. Procédé selon la revendication 10 ou 11, **caractérisé en ce que** le déplacement supplémentaire s'effectue dans deux sens orthogonaux.

13. Procédé selon l'une quelconque des revendications 9 à 12, **caractérisé en ce que** l'objet (20), la fixation pour objet (12) ou la disposition de caméras (14) est tournée de 90° à l'étape (b).
